# EUROPEAN PATENT SPECIFICATION

(11) **EP 2 757 044 B1**
(45) Date of publication and mention of the grant of the patent: **22.03.2017**
(21) Application number: 13178479.5
(22) Date of filing: 30.07.2013
(51) Int. Cl.: B65B 5/10, B65B 5/12, B65G 47/14

(54) **Device for gripping and transferring individual products**
Vorrichtung zum Greifen und Transportieren von Einzelprodukten
Dispositif pour saisir et transférer des produits individuels

(30) Priority: 22.01.2013 IT TO20130054
(43) Date of publication of application: 23.07.2014
(73) Proprietor: Cavanna S.p.A., 28077 Prato Sesia (NO) (IT)
(72) Inventor: Brolli, Elio, I-28077 Prato Sesia (Novara) (IT); Parino, Dario, I-28077 Prato Sesia (Novara) (IT)
(74) Representative: Marchitelli, Mauro

(56) References cited:
- WO-A1-2007/134603
- FR-A1- 2 936 601

## Description

### Field of the invention

The present invention relates to the packaging of products and refers to a device for gripping and transferring individual products, suitable for forming ordered groups of products from a continuous stream wherein different types of individual products are arranged randomly.

### Description of the prior art

In the packaging sector, for example of foodstuffs, it is frequently necessary to form ordered groups of products from a flow of different types of randomly-arranged products. For example, the flow of individual products could be formed from different types of confectionery products which must be packaged into groups with a specific composition of different products.

For this type of application, gripping and transferring devices are used comprising a belt for advancing a continuous flow of randomly-arranged individual products, a conveyor provided with a plurality of sections on which ordered groups of products are arranged, and a plurality of manipulators programmed to pick up the individual products from the belt and to deposit the products on the sections of the conveyor in a predetermined order, so as to form a continuous succession of ordered groups of products on the conveyor.

The document EP-A-0856465 describes a device for gripping and transferring individual products wherein the containers that receive the ordered groups of products move in a counterflow direction with respect to the movement of individual loose products. The conveyor which transports the ordered groups of products moves in a straight direction parallel and opposite with respect to the belt on which the individual loose products are arranged.

A drawback of the known solution from the document EP-A-0856465 consists in the fact that when the belt that transports the individual loose products has a width that is greater than the diameter of the work area of the manipulators it is necessary to have two conveyors for the ordered groups of products located on opposite sides of the belt, which requires two packaging machines, each associated with the respective conveyor of ordered groups of products.

Another drawback of this solution is that the counter-flow arrangement takes the groups of ordered products towards the source area of the individual products. In the case of biscuits or similar bakery products the ordered groups of products to be packaged are transported towards the oven from which the individual loose products emerge. This layout complicates the arrangement of the packaging machines that carry out the packaging of ordered groups of products.

From a layout point of view it would be preferable for the ordered groups of products to move in the same direction of transport as the individual loose products. However, this arrangement is not stable to the variations in flow rate of the individual loose products given that the manipulators which have the fewest number of individual loose products available are located at zones of the conveyor that have less vacant positions for the ordered groups of products.

The document E-A-2233400 describes a device for gripping and transferring individual products wherein the conveyor for the ordered groups of products moves in concordant flow with respect to the direction of progress of the products. In this case, to avoid instability problems, buffers are provided on which the manipulators deposit the excess individual products during the instances wherein there are no vacant positions on the conveyor for the ordered groups of products. The manipulators are programmed to pick up the individual products from the buffers and place them in the vacant positions of the conveyor during the instances wherein there are vacant positions available for the ordered groups of products on the conveyor.

A drawback of this solution is that the products that are provisionally arranged on the buffers are collected and deposited twice, which increases the risk of damage to the products, especially in the case of delicate products.

FR 2 936 601 discloses a device for gripping and transferring individual products according to the preamble of claim 1.

### Object and summary of the invention

The present invention aims to provide a device for gripping and transferring individual products that overcomes the problems of the prior art.

According to the present invention, this object is achieved by a device having the characteristics forming the subject of claim 1.

Preferred characteristics of the present invention are the subject of the dependent claims.

The claims form an integral part of the disclosure provided in relation to the invention.

### Brief description of the drawings

The present invention will now be described in detail with reference to the attached drawings, provided purely by way of non-limiting example, wherein:
- Figure 1 is a perspective view of a device according to the present invention,
- Figure 2 is a plan view of the device of Figure 1, and

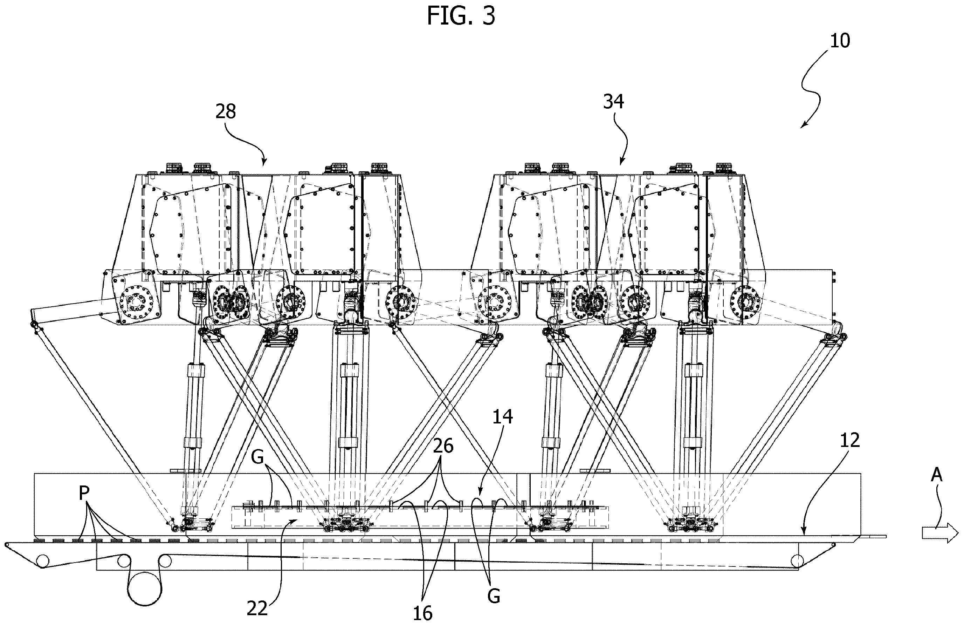

- Figure 3 is a side elevational view according to arrow III of Figure 1

### Detailed description of embodiments of the invention

With reference to the figures, numeral 10 indicates a device for gripping and transferring individual products according to the present invention. The device 10 includes a belt 12 movable in the direction indicated by the arrow A. Individual loose products P of different types are randomly arranged on the belt 12.

The device 10 comprises a conveyor 14 having a plurality of sections 16 configured to receive ordered groups G of products.

The conveyor 14 extends along a U-shaped path in a horizontal plane. The U-shaped path extends at least partially above the belt 12.

In the embodiment illustrated in the figures, the conveyor 14 comprises an input branch 18 and an output branch 20 formed by two straight parallel sections. The two parallel branches 18, 20 extend in a direction orthogonal to the direction of movement A of the belt 12 and are joined together by a connecting section 22.

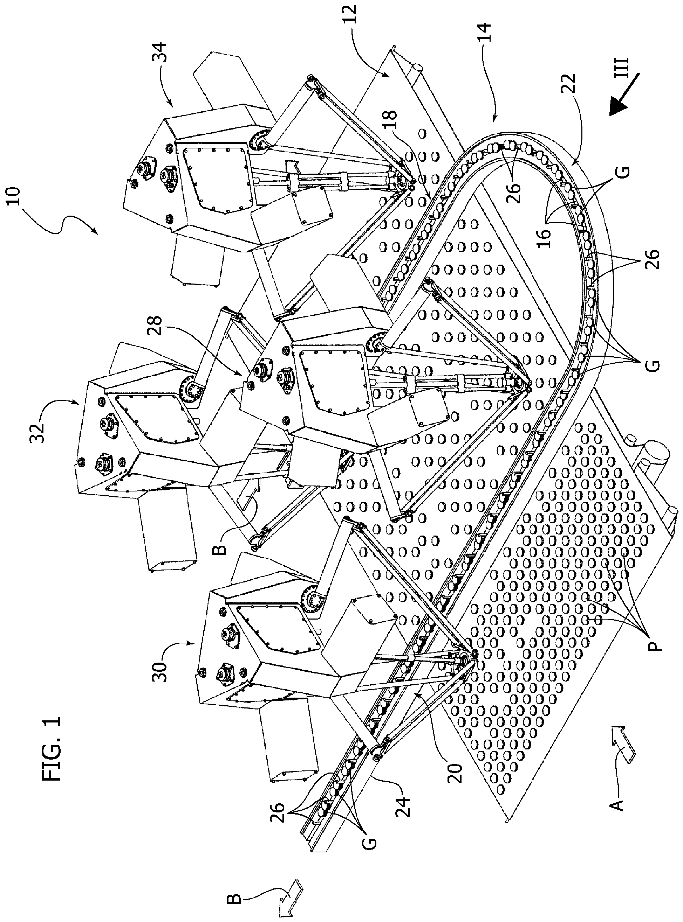

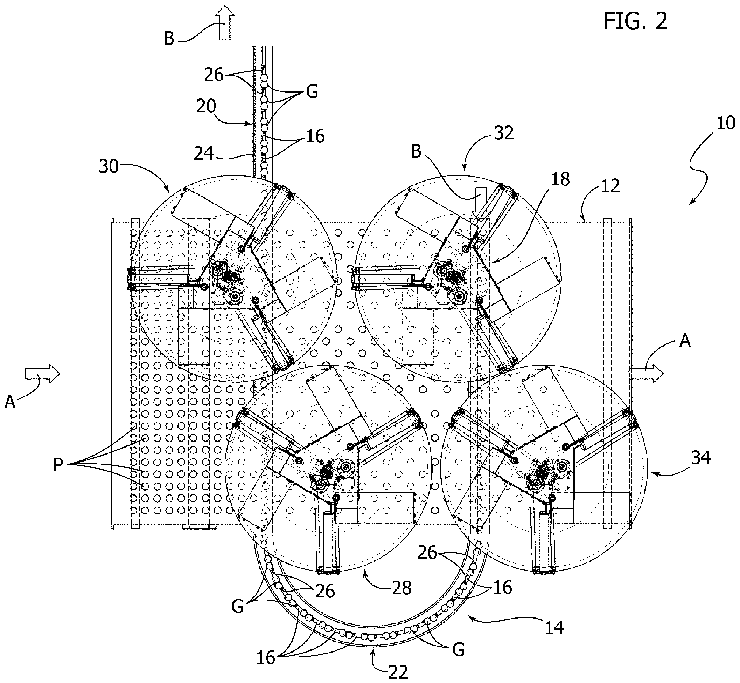

The conveyor 14 comprises a U-shaped stationary guide 24, along which a flexible transport element is movable, such as a chain or a belt, carrying a plurality of pushers 26 that push the ordered groups G of products along the guide 24. The sections 16 for the ordered groups G of products are formed by the guide portions 24 located between the adjacent pushers 26. During operation the sections 16 move along the U-shaped path in the direction indicated by the arrows B in Figures 1 and 2. The sections 16 of the conveyor 14 could receive the respective containers in which the groups of products G are arranged in an orderly way.

The device 10 comprises a plurality of manipulators 28, 30, 32, 34 programmed to pick up individual products P from the belt 12 and to deposit the products P on the sections 16 of the conveyor 14, so as to form ordered groups G of products on the sections 16. The manipulators 28, 30, 32, 34 are associated with vision devices that facilitate recognition of the type of individual products P, for the formation of ordered groups G with a specific composition of different products P.

In Figure 2 the work areas with their circumferences of the respective manipulators 28, 30, 32, 34 are indicated. The manipulators 28, 30, 32, 34 are arranged so as to cover the entire width of the belt 12 with their respective work areas. In particular, with reference to the direction of movement of individual loose products P, the manipulators 28, 30 cover the width of the belt 12 in an upstream area and the manipulators 32, 34 cover the width of the belt 12 in a downstream area.

In the case wherein the width of the belt 12 is equal to or less than the diameter of the work area of the manipulators 28, 30, 32, 34, a single upstream manipulator and a single downstream manipulator could be envisaged.

A conveyor (14) could also be envisaged with a series of U-shaped paths in series between them.

All the manipulators 28, 30, 32, 34 are arranged so as to cover a sector of the conveyor 14 with their respective work areas. In particular, the manipulators 32, 34 located downstream relative to the flow of products P cover the input branch 18 of conveyor 14 and the manipulators 28, 30 located upstream relative to the flow of products P cover the output branch 20 of the conveyor 14.

During operation, the pushers 26 of the conveyor 14 move in the direction indicated by the arrows B at a controlled speed as a function of the flow of individual loose products P on the belt 12.

The manipulators 28, 30, 32, 34 pick up the individual products P from the belt 12 and place them on the sections 16 of the conveyor 14 so as to form ordered groups G formed from a predetermined composition and arrangement of individual products P. On the output branch 20 of the conveyor 14 a continuous succession of ordered groups of products G is formed movable in the straight direction B. The output branch 20 of the conveyor 14 feeds the ordered groups G to a packaging machine (not shown).

As is visible in Figures 1 and 2, the manipulators 32, 34 located further downstream with respect to the advancing direction of the individual loose products P have a lower density of individual products P available in their respective work areas, but have a greater number of available positions on the sections 16 of the conveyor 14 in their respective work areas for the completion of the ordered groups G.

On the other hand, the manipulators 28, 30 that have a reduced availability of vacant positions on the sections 16 of the conveyor 14 in their respective work areas, have a higher density of individual loose products P in their respective work areas.

This arrangement ensures the greatest chance of filling the sections 16 with the predetermined combination of different products P.

The advancing speed of the conveyor 14 can be decreased during the instances when there is a lower flow of individual products P or increased during the instances when there is an increased flow of individual loose products P.

Of course, without prejudice to the principle of the invention, the details of construction and the embodiments may vary widely with respect to those described and illustrated without departing from the scope of the invention as defined by the claims that follow.

## Claims

1. Device for gripping and transferring individual products (P), comprising:
- a belt (12) on which individual products (P) are randomly arranged,
- a conveyor (14) having a plurality of sections (16) for groups of products, and
- a plurality of manipulators (28, 30, 32, 34) programmed to pick up the individual products (P) from the belt (12) and to deposit the products (P) on said sections (16) so as to form ordered groups (G) of products on said sections (16),
wherein said conveyor (14) comprises an input branch (18) and an output branch (20) joined together by a connecting section (22), so as to define at least one U-shaped path in a horizontal plane, wherein the input branch (18) and the output branch (20) are parallel to each other, and wherein during operation the sections (16) of the conveyor (14) move from the input branch (18) towards the output branch (20), **characterized in that** said U-shaped path is extending at least partially above said belt (12) and **in that** the input branch (18) and the output branch (20) are orthogonal to the direction of movement (A) of said belt (12).

2. Device according to claim 1, **characterised in that** said conveyor (14) comprises a stationary guide (34) which extends along a U-shaped path and carries a flexible transport element movable along the guide (24) and provided with a plurality of pushers (26) that push said ordered groups (G) of products along said guide (24).

3. Device according to claim 1 or claim 2, **characterised in that** it comprises at least one manipulator (28, 30) arranged upstream relative to the advancing direction (A) of the individual loose products (P) and at least one manipulator (32, 34) arranged downstream relative to the advancing direction (A) of the individual loose products (P), and **in that** said at least one manipulator (32, 34) arranged downstream has a work area that covers at least a part of the input branch (18) of the conveyor (14) and said at least one manipulator (28, 30) arranged upstream has a work area that covers at least a part of the output branch (20).

## Patentansprüche

1. Vorrichtung zum Greifen und Transportieren von Einzelprodukten (P), umfassend:
- ein Band (12), auf dem Einzelprodukte (P) zufällig angeordnet sind,
- einen Förderer (14), der eine Mehrzahl von Abschnitten (16) für Gruppen von Produkten aufweist, und
- eine Mehrzahl von Manipulatoren (28, 30, 32, 34), die dafür programmiert sind, die Einzelprodukte (P) von dem Band (12) aufzunehmen und die Produkte (P) auf den Abschnitten (16) so abzulegen, dass auf den Abschnitten (16) geordnete Gruppen (G) von Produkten gebildet werden,
wobei der Förderer (14) einen Eingangszweig (18) und einen Ausgangszweig (20) umfasst, die durch einen Verbindungsabschnitt (22) so zusammengefügt sind, dass mindestens ein U-förmiger Weg in einer horizontalen Ebene definiert ist,
wobei der Eingangszweig (18) und der Ausgangszweig (20) zueinander parallel verlaufen und wobei sich die Abschnitte (16) des Förderers (14) während des Betriebs von dem Eingangszweig (18) zu dem Ausgangszweig (20) bewegen,
**dadurch gekennzeichnet, dass** der U-förmige Weg sich zumindest teilweise oberhalb des Bands (12) erstreckt und dass der Eingangszweig (18) und der Ausgangszweig (20) orthogonal zur Bewegungsrichtung (A) des Bands (12) verlaufen.

2. Vorrichtung nach Anspruch 1, **dadurch gekennzeichnet, dass** der Förderer (14) eine stationäre Führung (34) umfasst, welche sich entlang eines U-förmigen Wegs erstreckt und ein flexibles Transportelement trägt, das entlang der Führung (24) bewegbar und mit einer Mehrzahl von Schiebern (26) ausgestattet ist, welche die geordneten Gruppen (G) von Produkten entlang der Führung (24) schieben.

3. Vorrichtung nach Anspruch 1 oder Anspruch 2, **dadurch gekennzeichnet, dass** sie mindestens einen Manipulator (28, 30) umfasst, der relativ zur Vorwärtsrichtung (A) der losen Einzelprodukte (P) vor diesen angeordnet ist, und mindestens einen Manipulator (32, 34) umfasst, der relativ zur Vorwärtsrichtung (A) der losen Einzelprodukte (P) hinter diesen angeordnet ist, und dadurch, dass der mindestens eine hinten angeordnete Manipulator (32, 34) einen Arbeitsbereich aufweist, der zumindest einen Teil des Eingangszweigs (18) des Förderers (14) abdeckt, und der mindestens eine vorn angeordnete Manipulator (28, 30) einen Arbeitsbereich aufweist, der zumindest einen Teil des Ausgangszweigs (20) abdeckt.

## Revendications

1. Dispositif pour saisir et transférer des produits individuels (P) comprenant :
une courroie (12) sur laquelle des produits individuels (P) sont agencés de manière aléatoire,
un transporteur (14) ayant une pluralité de sections (16) pour des groupes de produits, et
une pluralité de manipulateurs (28, 30, 32, 34) programmés pour prendre les produits individuels (P) de la courroie (12) et pour déposer les produits (P) sur lesdites sections (16) afin de former des groupes ordonnés (G) de produits sur lesdites sections (16),
dans lequel ledit transporteur (14) comprend une branche d'entrée (18) et une branche de sortie (20) assemblées par une section de raccordement (22), afin de définir au moins une trajectoire en forme de U dans un plan horizontal,
dans lequel :
la branche d'entrée (18) et la branche de sortie (20) sont parallèles entre elles, et dans lequel pendant le fonctionnement, les sections (16) du transporteur (14) se déplacent de la branche d'entrée (18) vers la branche de sortie (20),
**caractérisé en ce que** ladite trajectoire en forme de U s'étend au moins partiellement au-dessus de ladite courroie (12) et **en ce que** la branche d'entrée (18) et la branche de sortie (20) sont orthogonales à la direction de déplacement (A) de ladite courroie (12).

2. Dispositif selon la revendication 1, **caractérisé en ce que** ledit transporteur (14) comprend un guide fixe (34) qui s'étend le long d'une trajectoire en forme de U et transporte un élément de transport flexible mobile le long du guide (24) et qui est prévu avec une pluralité de poussoirs (26) qui poussent lesdits groupes ordonnés (G) de produits le long dudit guide (24).

3. Dispositif selon la revendication 1 ou la revendication 2, **caractérisé en ce qu'**il comprend au moins un manipulateur (28, 30) agencé en amont par rapport à la direction d'avancement (A) des produits en vrac individuels (P) et au moins un manipulateur (32, 34) agencé en aval par rapport à la direction d'avancement (A) des produits en vrac individuels (P), et **en ce que** ledit au moins un manipulateur (32, 34) agencé en aval a une zone de travail qui recouvre au moins une partie de la branche d'entrée (18) du transporteur (14) et ledit au moins un manipulateur (28, 30) agencé en amont a une zone de travail qui recouvre au moins une partie de la branche de sortie (20).
